# EUROPEAN PATENT APPLICATION

(11) **EP 4 516 461 A1**
(43) Date of publication of application: **05.03.2025**
(21) Application number: 23194124.6
(22) Date of filing: 29.08.2023
(51) Int. Cl.: B25J 9/06, B25J 9/10, B25J 18/02, B25J 18/06

(54) **STRUCTURE OF ARCHITECTURED MATERIAL FOR A MECHATRONIC MANIPULATOR AND MECHATRONIC MANIPULATOR USING THE SAME**

(71) Applicant: ECOLE POLYTECHNIQUE FEDERALE DE LAUSANNE (EPFL), 1015 Lausanne (CH)
(72) Inventor: Guan, Qinghua, 1025 St-Sulpice (CH); Stella, Francesco, 1012 Lausanne (CH); Hughes, Josie, 1025 St-Sulpice (CH)
(74) Representative: Gsmart

(57) **Abstract**

The present invention concerns a structure (10) of architectured material for a mechatronic manipulator (1) and a mechatronic manipulator having one or more degrees of freedom by using such structure which comprises at least one hollow flexible unit (11) comprising at least one elastic deformable material, characterized in that said hollow flexible unit (11) comprises at least two first helicoids (H1) having a generatrix and a first twist direction and at least two second helicoids (H2) having a generatrix and a second twist direction opposite to the first twist direction, resulting in said first and second helicoids being intertwined, said intertwined helicoids being trimmed around their centers along a direction parallel to said generatrixes so as to form said hollow flexible unit (11) of trimmed helicoids.

## Description

### Field of the invention

The present invention relates to the field of mechatronic and/or robotic systems and in particular to an integrated mechatronic manipulator and its structure enabling motions to be produced, and substantial forces to be applied, whilst limiting spatial constraints and making possible the portability of the manipulator assembly within which it is installed, for example a robotized system.

This invention can be used in many fields because its dimensions and the forces used for actuating it can be adapted to large ranges and its possible applications is limited by virtually only the materials used for its implementation (from microns to meters, although the preferred embodiments range in millimeters or centimeters).

This invention can, for example, be used in the medical or paramedical field. It can be used to obtain a device enabling surgical operations to be carried out on an organ or a region of the body of difficult access, under minimally invasive conditions. In this field of application the invention may provide manipulators offering great dexterity in undertaking complex surgical operations and actions in areas of difficult access. These instruments can be used with the support of a view of the scene via an endoscope, or using non-invasive interventional imaging techniques such as ultrasonic probes (ultrasound images), radiography (x-rays), MRI, etc. Their design also enables them to be used in open surgery, to reach areas which are not accessible by straight instruments, or to include a viewing source.

This invention can also be used, for example, to produce artificial joints or limbs. Indeed, artificial limbs or portable robotized gripping/manipulation devices are required in various contexts: for impaired users who can benefit from the great dexterity of an artificial limb, to provide relief for operators, for the sake of increased productivity and responsiveness (increasing work rates), to carry out these operations remotely or in hostile environments, and to compensate for or supplement gripping/manipulation functions when they are not possible.

The fields of application of these mechatronic/robotic systems (and the present invention) are, for example:
- industrial gripping and manipulation (packaging, selective waste sorting, preparation of orders for Mail-Order Sales, dismantlement, etc.);
- humanoid and service robotics (assistance for able-bodied, disabled or elderly persons, etc.);
- orthoses or prostheses of upper limbs for elderly or disabled persons, or amputees (for example fingers or hands).

### Background of the invention

In the field of mechatronic manipulators and/or robotic systems, various systems are known and they include various types of structures, sometimes using architectured materials. The systems found in the literature can be characterised by their dexterity (kinematics, total number of degrees of mobility, etc.), their power (forces used in the tasks to be accomplished), their size, their mass, their instrumentation with sensors, but also their portability.

Concerning the minimally invasive surgery, a high level of dexterity (a large number of degrees of mobility controlled selectively), as well as high power level and low encumbrance, are required to accomplish surgical tasks. In addition, mass and portability are desired criteria to facilitate their manipulation and control by surgeons. Finally, their instrumentation with sensors is a guarantee of safety during the operation. Versatile, dexterous and powerful robotized manipulators are required for an effective accomplishment of varied tasks of gripping and complex manipulation of various objects. Indeed, the objects concerned may be of complex shape, of variable dimensions and mass, and may be fragile, deformable, flexible, wet, soiled, with irregular surface conditions and adhesion properties (clothing, food, boxes, tools, persons, etc.). Mechanical, robotic or more generally artificial fingers and/or hands are good candidates. Whether for their use in industry, or as prostheses, the additional criteria of size and mass are also important to be able to make them portable (by a robot arm or a person). Finally, their instrumentation with sensors is a guarantee of safety for the manipulated objects and/or the user.

A number of robotized instruments or systems are known, for example in minimally invasive surgery, but mainly for exploring purposes only and their use for manipulation is generally not possible because of their excessive flexibility, their low degree of positional rigidity, and the low forces able to be applied by the distal tool.

Some recent disruptive innovations in material science have used architectured materials, suited for robotics applications, but these advancements have not led to a fully operational robots with a scale, or level of functionality that starts to mirror that demonstrated by animals. A need thus remains in developing human-scale robots that have open-loop precision, compliance and workspace that enables them to be useful and safe around humans.

The state of the art of manipulator assemblies and robotic systems generally have at least one drawback by failing to respond to at least one of the following criteria:
- dexterity and versatility (manipulator architecture and sufficiently high number of degrees of mobility to accomplish complex actions), with high precision, large workspace and compliant interactions with the environment and/or objects ;
- integration and portability (lesser encumbrance, lightness), in order to be able, for example, to be portable (by a surgeon or more generally a user), integrated in a robot arm (surgical, industrial, humanoid, service), or to constitute an orthosis/prosthesis (of human appearance) which can be adapted to the limb of a person,
- generation of relatively high forces (at least of the order of those applied by the surgeon or the human hand).

### Summary of the invention

One purpose of the present invention is to overcome at least some drawbacks of the prior art by proposing a structure of architectured material having improved performances allowing its use in manipulators able to perform precise manipulations in a wide range.

This purpose is achieved by a structure of architectured material for a mechatronic manipulator having one or more degrees of freedom, said structure comprising at least one hollow flexible unit comprising at least one elastic deformable material, characterized in that said hollow flexible unit comprises at least two first helicoids having a generatrix and a first twist direction and at least two second helicoids having a generatrix and a second twist direction opposite to the first twist direction, resulting in said first and second helicoids being intertwined, said intertwined helicoids being trimmed around their centers along a direction parallel to said generatrixes so as to form said hollow flexible unit of trimmed helicoids.

According to another feature, said first and second helicoids both have a same radius.

According to another feature, said first and second helicoids both have a helical angle, defining the degree of their twist, both angles having the same absolute value.

According to another feature, said angles of the helicoids have a value comprised between one and seventy degrees, preferably between twenty and fifty degrees.

According to another feature, the generatrixes of said first and second helicoids are colinear.

According to another feature, said hollow flexible unit comprises the same number of first helicoids and second helicoids, said number being comprised between three and twelve, preferably six.

According to another feature, each first and second helicoids are offset from, respectively, the same other first and second helicoids by an offset angle radially from the center, such that the first and second helicoids are equally distributed across the periphery of the hollow flexible unit, the offset angle of the first helicoids having the same value as the offset angle of the second helicoids.

According to another feature, said helicoids are trimmed according to a trimming radius lower than the radius of the helicoids so as to obtain a remaining width of the trimmed helicoids, defined by the difference between the radius of the helicoids and the trimming radius, enabling to define a width to radius ratio of the trimmed helicoids forming said hollow flexible unit.

According to another feature, said width to radius ratio is configured to differentially tune the axial stiffness and the bending stiffness of the flexible hollow unit, within a range of width to radius ratios comprised between 0,1 and 1, preferably between 0,3 and 0,5.

According to another feature, said elastic deformable material of the helicoids has a thickness which is determined as a function of the radius of the helicoids and configured to tune the absolute stiffness of the flexible hollow unit, within a range of thickness to radius ratios which are comprised between 0,01 and 0,5, preferably between 0,1 and 0,3.

According to another feature, said hollow flexible unit is tailored in height such said helicoids describe at least one full revolution within the height of said hollow flexible unit.

Another purpose of the present invention is also to overcome at least some drawbacks of the prior art by proposing a mechatronic manipulator having improved performances allowing precise manipulations in a wide range.

This purpose is reached by a mechatronic manipulator having one or more degrees of freedom able to be controlled by a control unit connected to one or more actuators able to actuate said mechatronic manipulator, characterized in that it comprises at least one structure according to the invention, extending from a proximal end able to be connected to the control unit to a distal end aiming for objects to be manipulated in the environment of the manipulator.

According to another feature, said structure comprises one or several sections composed of one or several hollow flexible units, each section being actuated in one direction by a single actuator or in several directions by a single set of actuators.

According to another feature, said multiple hollow flexible units of each section are connected to each other in series or in parallel or both, in an arborescence.

According to another feature, the actuators of a single set of actuators impart a motion to its section at locations which are equally distributed across the periphery of the hollow flexible units.

According to another feature, the locations of a set of actuators imparting a motion to a given section are offset from the locations of other sets of actuators imparting a motion to other sections, from an offset angle having a value determined as a function of the number of sections arranged in series.

According to another feature, the set of actuators comprises two to four actuators, preferably three actuators, for covering every direction of motion by a combined actuation from the control unit.

According to another feature, the actuators of a section are decoupled from the actuators of the other sections even when the sections are in series, such that the motion imparted to a section is not imparted to upstream sections of the series.

According to another feature, each section and/or hollow flexible unit comprise a proximal and a distal end defined as those of said of the structure, said actuators imparting the motion to the distal end of each section and/or hollow flexible unit.

According to another feature, said actuators of a section comprise a cable extending from the distal end of said section to the proximal end of said structure wherein a motor enables to pull on the cable so as to actuate said section.

According to another feature, the cable of the actuators of a section is arranged within a guiding tube which extends from the proximal end of this section to the proximal end of the structure, such that an upstream section is not imparted by the motion of this section.

According to another feature, said guiding tube of a section is configured to slide relative to an upstream section along sliding guides enabling that the motion of the upstream section does not impart the downstream section.

According to another feature, at least the distal end of the manipulator comprises a distal section having at least one gripping actuator imparting a contraction of the diameter of the most distal hollow flexible unit for enabling the grasping of objects in the environment of the manipulator.

### Brief description of the drawings

Various technical features and advantages of the present invention will appear more clearly by reading the description of various examples of embodiments below, made in reference to the illustrative and non-limiting drawings, among which:
[Fig 1] Figure 1 shows a structure and its manufacturing process according to some embodiments of the present invention ;
[Fig 2] Figure 2a and 2b show respectively the variations of thickness and width to radius ratio of structures and their respective impacts on the stresses distribution in case of axial compression and bending motion ;
[Fig 3] Figure 3a, 3b and 3c show the results of experimental tests of a structure according to some embodiments of the present invention, as, respectively, axial and bending stiffness of structures with varied thickness, axial and bending stiffness of structures with varied width to radius ratio (W/R) and non-dimensional stiffness ratio *λ_{stiff}* = Kₐₓᵢₐₗ R²/K_{bend} of structures with varied thickness and width to radius ratio.
[Fig 4] Figures 4a, 4b and 4c show, respectively, a coupled manipulator, an independent (i.e., decoupled) manipulator and, designs of various sections of a manipulator, according to some embodiments of the present invention.
[Fig 5] Figure 5 show an example of a robotic system comprising a manipulator according to some embodiments of the present invention, with actuators and motors for imparting motion to the manipulator.
[Fig 6] Figures 6a, 6b and 6c show a manipulator tested in motion, respectively, for a open-loop precision task, a workspace test task and a compliance task.

### Detailed description of embodiments

The present invention concerns a structure (10) of architectured material for a mechatronic manipulator (1) and such a manipulator (1) comprising such structure (10) and having one or more degrees of freedom, preferably all degrees of freedom thanks to the advantages of the present invention. This kind of manipulator (1) may be integrated in robots of various size and shapes depending on the applications, as detailed in the preamble of the present application.

In a general manner, the structure (10) comprises at least one hollow flexible unit (11) comprising at least one elastic deformable material. More specifically, the hollow flexible unit (11) comprises at least two first helicoids (H1) having a generatrix and a first twist direction and at least two second helicoids (H2) having a generatrix and a second twist direction opposite to the first twist direction, resulting in said first and second helicoids being intertwined, said intertwined helicoids being trimmed around their centers along a direction parallel to said generatrixes so as to form said hollow flexible unit (11) of trimmed (intertwined) helicoids. Generally, these helicoids are ruled helicoids, preferably closed helicoid and ideally, normal helicoids. Other variants of helicoids may be used, but the problem of the symmetry of the mobility of the manipulator explain these preferences.

The term "intertwined" here means that two helicoids of opposite direction will intersect each other such that they in fact form a single structural element. The term intercross could also be used but since the two helicoids are merged at their intersections, the term intertwined has been chosen without implying any limitation.

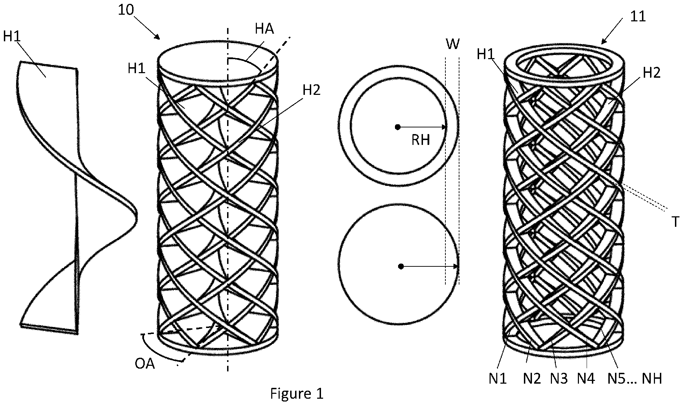

In some embodiments, each first (H1) and second (H2) helicoids are offset from, respectively, the same other first (H1) and second (H2) helicoids by an offset angle (OA) radially from the center, such that the first and second helicoids (H1, H2) are equally distributed across the periphery of the hollow flexible unit (11), the offset angle of the first helicoids (H1) having the same value as the offset angle of the second helicoids (H2). In a preferred embodiment, as shown in figure 1 for example, there are six first helicoids and six second helicoids which are distributed over the radius every 30° and which are offset to each other by 30° such that they intersect regularly. The structure thus obtained has a regular distribution of the helicoids forming a reliable grid which shows an optimized behavior.

In some embodiments, said hollow flexible unit (11) is tailored in height such that said helicoids describe at least one full revolution within the height of said hollow flexible unit (11). Thereby, with the preferable regular distribution of the helicoids and such height of the unit, several units can be used in lines, as segments or sections of manipulators having various lengths. In the figures, the two ends of the unit (11) comprise a crown linking the ends of the helicoids in a plane orthogonal to the axis of generatrix, but such crown is not necessary for the structure and/or the manipulators, although it can advantageously be used for the fixation of some component of the robot or mechatronic manipulator, as detailed below.

In some embodiments, said first and second helicoids (H1, H2) both have a same radius (RH). Preferably the generatrixes of said first and second helicoids (H1, H2) are colinear. Such arrangements are also preferred for obtaining a symmetrical structure having a more reliable behavior in every direction, but other variants are possible.

In some embodiments, said helicoids (H1, H2) are trimmed according to a trimming radius lower than the radius (RH) of the helicoids (H1, H2) so as to obtain a remaining width (W) of the trimmed helicoids, defined by the difference between the radius (RH) of the helicoids and the trimming radius, enabling to define a width to radius (W/R) ratio of the trimmed helicoids forming said hollow flexible unit (11).

The terms "trimmed" or "trimming" are used in the present application to designate the fact that the structure is hollow in its center along its longitudinal axis. Such hollow shape can be obtained by an actual trimming for removing material at the center, but it can be obtained by simply molding or 3D printing or any other techniques without requiring an actual removal of material but rather a direct production of a hollow structure. These terms should thus not be considered as implying any limitation, such as a manufacturing method for example.

The structure is called "of architecture material" because it comprises at least one material (obtained for example by extrusion or 3D printing and/or cutting, trimming, etc. or any other technique known in the art) which is tailored for displaying a shape or "architecture" complying to a specific arrangement of the material allowing to reach the purposes of the present invention, as detailed below. Instead of relying on the material properties, architectured materials leverage geometry to tune their physical properties. Architectured structures display a variety of mechanical properties as a function of their geometry. They allow for low level control of the dynamics of the designed structure and the interactions with the environment The present invention achieves its goals by using a novel type of architecture material in particular thanks to an optimized stiffness.

Indeed, whatever the application, the general stiffness of instruments or manipulators is often a problem for obtaining efficient manipulators. In addition, the axial stiffness and the bending stiffness are two different properties which generates problems for designing manipulators having workspace and compliance enabling it to perform tasks that require intelligent environmental interactions and safe-human interactions. For any actuated structure, the bending stiffness and the axial stiffness are two key parameters that drive the resulting workspace, compliance and sensitivity to perturbations. To identify how the design affects these performance parameters, it is first necessary to understand the relationship between geometry and stiffness properties. The inventors of the present invention therefore designed structures and manipulators comprising trimmed intertwined helicoids.

For architectured structures (10) such as trimmed intertwined helicoids, these stiffnesses are largely driven by their geometrical parameters. In the present invention, these are the helicoid thickness (T), the helicoid width (W), the number of helicoids (NH) number and the helical angle (HA), as shown in Figure 1. To investigate the relationship between the geometric parameters and the axial/bending stiffness, FEM ("Finite Element Method") analysis was conducted for different geometries. In this analysis, base geometrical parameters of number of helix (NH or Nhelix) = 6, helicoidal angle (HA or α) = 33.2_{°}, , radius (RH or R) = 30mm, width (W) = 6mm were used, and from these, each parameter was varied in turn to evaluate its effect on the resulting mechanical properties of the TH structure.

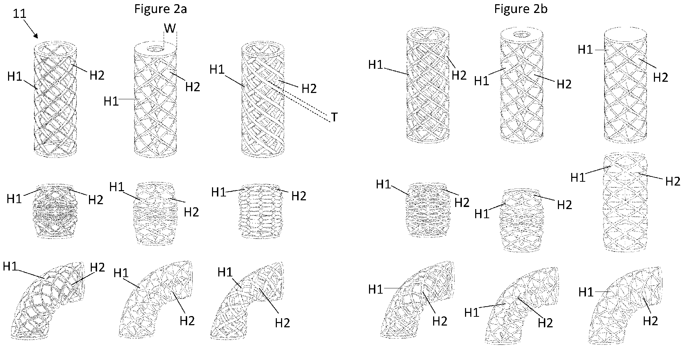

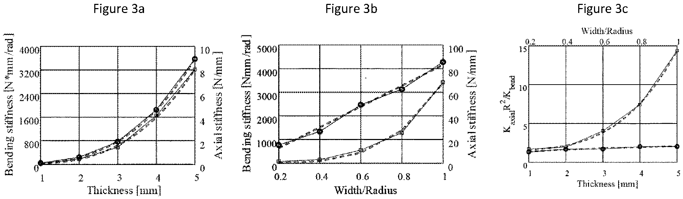

The FEA ("Finite Element Analysis") simulation of the structures (10) while varying thickness (T) and the width to radius ratio (W/R) are shown in figure 2a and figure 2b, respectively, for axial loading and a bending moment. At higher thickness the structure starts to show undesirable buckling in response to bending moments. The quantitative stiffness results are displayed in Figure 3a, which shows a cubic increase in the axial and bending stiffnesses with thickness (the fit curves in this example were K_{bend} = 29,79T^{2,97} and Kₐₓᵢₐₗ = 0,05T^{3,16}). However, for a different geometrical parameter such as the width to radius ratio (W/R), the bending stiffness (K_{bend}) increases linearly with (W/R) whilst the axial stiffness (Kₐₓᵢₐₗ) shows a fourth order relationship with (W/R), as shown in Figure 3b (the fit curves in this example were K_{bend} = 4404,97.W/R-244,24 and Kₐₓᵢₐₗ = 67,84.W/R⁴). So as to better identify these properties, a relative stiffness ratio can be calculated as λ_{stiff} = Kₐₓᵢₐₗ R²/K_{bend} which provides a single, dimensionless ratio between these two stiffnesses. Interestingly, λ_{stiff} is approximately constant with thickness (T) while it increases with the 3,45 power of width to radius ratio (W/R), as shown in figure 3c. This can be explained, at least partially, by the fact that helicoid structures has a surface gradient that reduces with radius (mainly determined by the helical angle). This variation in gradient means that the steeper inner material prevents compression, contributing mostly to axial stiffness, whilst the outer lower gradient material prevents bending, contributing more to bending stiffness. Besides, helicoid surface thickness then provides control of the absolute values of the stiffness. These are advantageous property of trimmed intertwined helicoids as they enable a large range of possible absolute bending stiffnesses whilst the relative stiffness ratio λ_{stiff} can also be varied significantly. They can also be controlled by independent geometric parameters. The axial and bending stiffness ratio λ_{stiff} can be tuned by adjusting the width to radius ratio (W/R) while the thickness (T) can be tuned to get desired absolute stiffness.

Taking advantage of this property, the present invention provides for some embodiments in which said width to radius (W/R) ratio is configured to differentially tune the axial stiffness and the bending stiffness of the flexible hollow unit, within a range of width to radius (W/R) ratios comprised between 0,1 and 1, preferably between 0,3 and 0,5. In some embodiments, said elastic deformable material of the helicoids (H1, H2) has a thickness (T) which is determined as a function of the radius (RH) of the helicoids and configured to tune the absolute stiffness of the flexible hollow unit (11), within a range of thickness to radius ratios which are comprised between 0,01 and 0,5, preferably between 0,1 and 0,3.

Varying the helical angle (α) and number of helicoids (NH) was also investigated and can be used to vary the stiffness, but it also introduces undesired behaviors in some range of parameters. For example, when the helices angle is high, compression causes stress concentration, and the deformation behavior becomes nonlinear. Similarly, when the helicoid density becomes high, thin-wall cylinder buckling emerges. Therefore, a compromised is preferred for these parameters within the ranges detailed below, and the present invention proposes to take advantage of the interesting features of the thickness and width to radius ratio for tuning the structure (10) to the desired behavior according to the various possible applications. In addition, Sine-wave structures, which are known in the art, were compared to the present helicoidal structures and it has been observed that the sine wave structures tend to exhibit to high compression stresses at, and around, the crossing area between the various adjacent sine waves along the structure. Therefore, the deformation behavior of sine wave structures tends to become nonlinear. Furthermore, helicoidal structures are preferred in the present application for their reliability and the possibility of tuning the axial and bending stiffnesses separately and thus enable a wide range of applications.

In some embodiments, said first and second helicoids (H1, H2) both have a helical angle (HA), defining the degree of their twist, both angles having the same absolute value. As in general, this angle is measured at their outer edge in the example of values described below. In some embodiments, said angles (HA) of the helicoids have a value comprised between one and seventy degrees, preferably between twenty and fifty degrees.

In some embodiments, said hollow flexible unit (11) comprises the same number (NH) of first helicoids (H1) and second helicoids (H2), said number (NH) being comprised between three and twelve, preferably six.

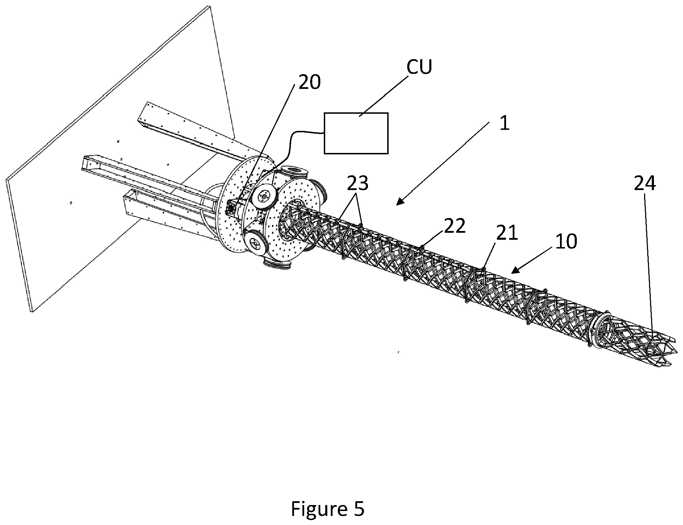

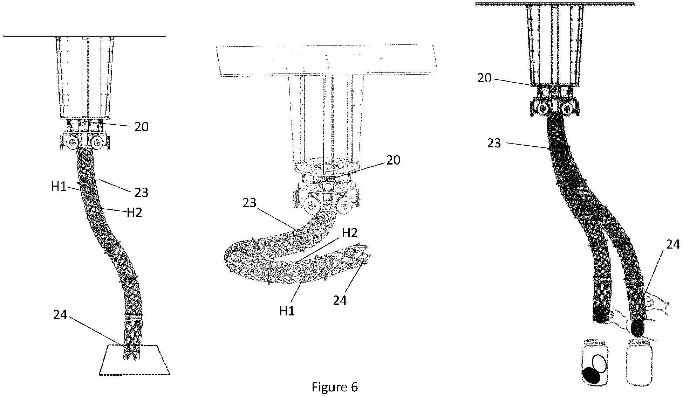

As explained above, the present invention also concerns a mechatronic manipulator, this term because used to define a device able to be moved and to actuate (e.g., grip and move) objects. Such mechatronic manipulator (1) thus has one or more degrees of freedom and is able to be controlled by a control unit (CU) connected to one or more actuators (2) able to actuate said mechatronic manipulator (1). Such combination of a manipulator with an actuator and a control unit forms, as itself, a system which can be defined as a robot, as long as the control unit is able to be programed for executing various movements and tasks. The details about the control unit, its hardware (processor or the like) and software are not necessary because they are standard for those of skills in the art. Such mechatronic manipulator according to various embodiments of the present invention has the advantage to include at least one structure (10) according to the present invention, extending from a proximal end able to be connected to the control unit (CU) to a distal end aiming for objects to be manipulated in the environment of the manipulator (1). In a preferred (easiest) embodiment, the manipulator is used vertically (as shown in figures 5 and 6 for example), preferably with the proximal end upward and the distal end downward, for obtaining a hanging "elephant-trunk" manipulator. However, thanks to its large degrees of stiffness, the manipulator can be used as standing (proximal end downward and distal end upward) but it can also be used horizontally. The hanging configuration is preferred for limiting power consumption and wear of the manipulator at rest. However, the present invention provides for various sizes of the structures (10) and thus for various arrangements of the structures within the manipulator. In some embodiments, said multiple hollow flexible units (11) of each section (S) are connected to each other in series or in parallel or both, in an arborescence. An arrangement in several parallel or diverging lines would result in a manipulator mimicking a robotic hand, which is a good example of the wide variety of configurations possible. The present invention which is thus not limited to the examples shown in the figures.

In some embodiments, said structure (10) comprises one or several sections (S) composed of one or several hollow flexible units (11), each section (S) being actuated in one direction by a single actuator (2) or in several directions by a single set of actuators (2). Preferably, there are several sections, for a better control of the bending in various directions. In some embodiments, each unit is defined by the full revolution of its helicoids and it might be terminated by a crown linking the ends of the helicoids on each end of the unit, as illustrated in the figures. Such crown may have the same width to radius (W/R) ratio as the unit itself but may have a higher W/R ratio, for example for receiving other components, like the sliding guides for example or any other useful component, for example among those described below.

In some embodiments, each section (S) and/or hollow flexible unit (11) comprise a proximal and a distal end defined as those of said of the structure (10), said actuators (2) imparting the motion to the distal end of each section (S) and/or hollow flexible unit (11). Indeed, since each section (S) can comprise one or several units (11), the actuators may impart motion to the distal end of each section, which is located at the distal end of one of their units (11). Generally, it is sufficient to impart motion at the end of one section, especially in the case of actuators comprising cables pulling the distal end of the section, but other variants are possible, in particular for other types of actuators.

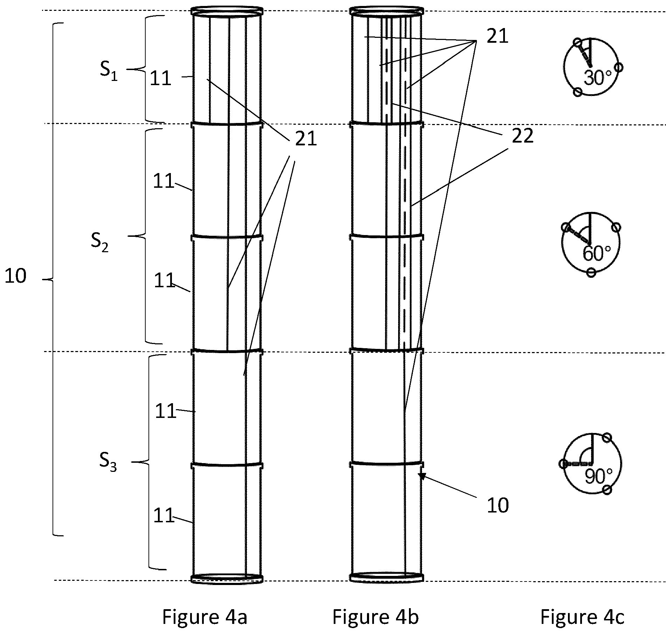

In some embodiments, the actuators (2) of a single set of actuators impart a motion to its section (S) at locations which are equally distributed across the periphery of the hollow flexible units (11). In some embodiments, the locations of a set of actuators (2) imparting a motion to a given section (S) are offset from the locations of other sets of actuators (2) imparting a motion to other sections (S), from an offset angle having a value determined as a function of the number of sections arranged in series. In some embodiments, the set of actuators (2) comprises two to four actuators, preferably three actuators, for covering every direction of motion by a combined actuation from the control unit (CU). Figure 4c shows an example of such distribution of the actuators along various sections. In this preferred example, there are three manipulators (tendons for example) regularly distributed every 60° across the radius and each set of three actuators of one section is offset from the set of three actuators of the adjacent section. A combined actuation hollow for example compression of a section (by actuating the set at the same time) and/or a bending of various sections to various degrees in various directions.

In some embodiments, the actuators (2) of a section (S) are decoupled from the actuators of the other sections (S) even when the sections are in series, such that the motion imparted to a section is not imparted to upstream sections of the series. Indeed, it has been observed by the inventors of the present invention, that decoupling the various sections/segments of the manipulator enables a better control of the motions. Figure 4a illustrates a non-limiting example of a "coupled manipulator" in which the actuators, called "tendons" (because they are formed by pulling cables) of each section are actuated along the upstream sections. Figure 4b illustrates and an independent manipulator in which, for example by the fact that the tendons of each section is enclosed within a guide, such as Bowden cables. It should be noted that, for example as illustrated in figures 4a and 4b, the sections can comprise one or more hollow flexible units (11) and their number may vary along the longitudinal axis of the manipulator.

In some embodiments, said actuators (2) of a section (S) comprise a cable (21) extending from the distal end of said section (S) to the proximal end of said structure (10) wherein a motor (20) enables to pull on the cable (21), so as to actuate said section (S). For example, the cable can be connected to a pulley or string wheel at the proximal end of the manipulator, wherein a motor is driving the rotation to exert a tension on the cables and impart motions to the manipulator, in a manner similar to a tendon in the human body. However, many other types of actuations are possible for those of skills in the art who will still appreciate the efficiency and low cost of such tendons.

In some embodiments, the cable (21) of the actuators (2) of a section (S) is arranged within a guiding tube (22) which extends from the proximal end of this section (S) to the proximal end of the structure (10), such that an upstream section (S) is not imparted by the motion of this section (S). Such kind of embodiment is thus an example of the decoupling mentioned above. In these embodiments, the cable can be similar to Bowden cables, but the same feature of decoupling between sections applies to other types of actuators, (such as for example electromagnetic or electrostatic actuators).

In some embodiments, said guiding tube (22) of a section (S) is configured to slide relative to an upstream section (S) along sliding guides (23) enabling that the motion of the upstream section does not impart the downstream section (S). such sliding guides 23) can also be used in the case of other types of actuators than the cables (Bowden cables in particular) and they may be form by guiding clips on any section in which the actuators of the downstream sections can slide in order to impart motion of these sections without any disturbance from the motion of the upstream sections. This sliding of the actuator may imply the retraction of the actuator up to the proximal end of the manipulator, for example at the level of the motor. Figure 5 shows an example of such arrangement wherein the housing tubes (22) of the cables (21) form loops at the level of the motor and these loops can increase in size when the manipulator is actuated toward said motor. An example of such movement is shown in figure 6b. Figures 6a, 6b and 6c shows illustrative and non-limiting examples of motions of the manipulator according to some embodiments of the present invention, as tested in some experiments. In particular, Figure 6a shows the open-loop precision of the manipulator, Figure 6b shows the large workspace of the manipulator, and Figure 6a shows the compliance of the manipulator, which can safely and efficiently interact with a human in performing tasks.

In some embodiments, at least the distal end of the manipulator (1) comprises a distal section having at least one gripping actuator (24) imparting a contraction of the diameter of the most distal hollow flexible unit (11) for enabling the grasping of objects in the environment of the manipulator (1). Figures 5, 6a and 6c show examples of the use of such gripping end. In these examples, the gripping end comprises a peripheral tendon encircling a diameter close to the distal end of the distal section of the manipulator, which is thus contracted by pulling on a dedicated Bowden cable. However, the gripper at the distal end can be of various types and eventually made by a combination of several smaller manipulators arranged according to some embodiments of the present invention (preferably at least three manipulators forming three fingers allowing to grasp objects). It is thus understood by reading the present application, that the present invention provides for various combinations of structures and manipulators. A robotic system can indeed comprise several manipulators designed as described herein and combined to form a complex arm able to perform complex tasks. The low cost, the softness of the material used are other advantages of the present invention, in addition to the tunability of the structure to the applications and tasks to be performed.

The present application describes various technical features and advantages with reference to the figures and/or to various embodiments. Those skilled in the art will understand that the technical features of a given embodiment can indeed be combined with features of one or more other embodiment(s) unless the reverse is explicitly mentioned or these characteristics are incompatible or the combination does not work. In addition, the technical features described in a given embodiment can be isolated from the other features of this mode unless the reverse is explicitly mentioned, in particular because the functional considerations provided in the present application will provide a sufficient explanation so that the structural adaptations possibly necessary are within the reach of those skilled in the art. Therefore, the embodiments described in the present application should be considered by way of illustration and the invention should not be limited to the details given above.

### List of reference numbers

- 1: mechatronic manipulator
- 10: Structure
- 11: Hollow flexible unit
- H1: first helicoids
- H2: second helicoids
- RH: radius
- HA: helical angle
- OA: offset angle
- W: width of the structure (remaining width after trimming)
- W/R: width to radius ratio
- NH: Number of Helicoids
- T: thickness
- CU: control unit
- S: section
- 2: actuators
- 21: cable
- 20: motor
- 22: guiding tube
- 23: sliding guide
- 24: gripping actuator

## Claims

1. Structure (10) of architectured material for a mechatronic manipulator (1) having one or more degrees of freedom, said structure comprising at least one hollow flexible unit (11) comprising at least one elastic deformable material, **characterized in that** said hollow flexible unit (11) comprises at least two first helicoids (H1) having a generatrix and a first twist direction and at least two second helicoids (H2) having a generatrix and a second twist direction opposite to the first twist direction, resulting in said first and second helicoids being intertwined, said intertwined helicoids being trimmed around their centers along a direction parallel to said generatrixes so as to form said hollow flexible unit (11) of trimmed helicoids.

2. Structure (10) according to claim 1, wherein said first and second helicoids (H1, H2) both have a same radius (RH).

3. Structure (10) according to any one of claims 1 or 2, wherein said first and second helicoids (H1, H2) both have a helical angle (HA), defining the degree of their twist, both angles having the same absolute value.

4. Structure (10) according to claim 3, wherein said angles (HA) of the helicoids have a value comprised between one and seventy degrees, preferably between twenty and fifty degrees.

5. Structure (10) according to any one of claims 1 to 3, wherein the generatrixes of said first and second helicoids (H1, H2) are colinear.

6. Structure (10) according to any one of claims 1 to 5, wherein said hollow flexible unit (11) comprises the same number of first helicoids (H1) and second helicoids (H2), said number being comprised between three and twelve, preferably six.

7. Structure (10) according to any one of claims 1 to 6, wherein each first (H1) and second (H2) helicoids are offset from, respectively, the same other first (H1) and second (H2) helicoids by an offset angle (OA) radially from the center, such that the first and second helicoids (H1, H2) are equally distributed across the periphery of the hollow flexible unit (11), the offset angle of the first helicoids (H1) having the same value as the offset angle of the second helicoids (H2).

8. Structure (10) according to any one of claims 2 to 7, wherein said helicoids (H1, H2) are trimmed according to a trimming radius lower than the radius (RH) of the helicoids (H1, H2) so as to obtain a remaining width (W) of the trimmed helicoids, defined by the difference between the radius (RH) of the helicoids and the trimming radius, enabling to define a width to radius (W/R) ratio of the trimmed helicoids forming said hollow flexible unit (11).

9. Structure (10) according to claim 8, wherein said width to radius (W/R) ratio is configured to differentially tune the axial stiffness and the bending stiffness of the flexible hollow unit, within a range of width to radius (W/R) ratios comprised between 0,1 and 1, preferably between 0,3 and 0,5.

10. Structure (10) according to any one of claims 2 to 9, wherein said elastic deformable material of the helicoids (H1, H2) has a thickness (T) which is determined as a function of the radius (RH) of the helicoids and configured to tune the absolute stiffness of the flexible hollow unit (11), within a range of thickness to radius ratios which are comprised between 0,01 and 0,5, preferably between 0,1 and 0,3.

11. Structure (10) according to any one of claims 1 to 10, wherein said hollow flexible unit (11) is tailored in height such said helicoids describe at least one full revolution within the height of said hollow flexible unit (11).

12. Mechatronic manipulator (1) having one or more degrees of freedom able to be controlled by a control unit (CU) connected to one or more actuators (2) able to actuate said mechatronic manipulator (1), **characterized in that** it comprises at least one structure (10) according to any one of claims 1 to 11, extending from a proximal end able to be connected to the control unit (CU) to a distal end aiming for objects to be manipulated in the environment of the manipulator (1).

13. Mechatronic manipulator (1) according to claim 12, wherein said structure (10) comprises one or several sections (S) composed of one or several hollow flexible units (11), each section (S) being actuated in one direction by a single actuator (2) or in several directions by a single set of actuators (2).

14. Mechatronic manipulator (1) according to claim 13, wherein said multiple hollow flexible units (11) of each section (S) are connected to each other in series or in parallel or both, in an arborescence.

15. Mechatronic manipulator (1) according to any one of claims 13 or 14, wherein the actuators (2) of a single set of actuators impart a motion to its section (S) at locations which are equally distributed across the periphery of the hollow flexible units (11).

16. Mechatronic manipulator (1) according to claim 15, wherein the locations of a set of actuators (2) imparting a motion to a given section (S) are offset from the locations of other sets of actuators (2) imparting a motion to other sections (S), from an offset angle having a value determined as a function of the number of sections arranged in series.

17. Mechatronic manipulator (1) according to any one of claims 13 to 15, wherein the set of actuators (2) comprises two to four actuators, preferably three actuators, for covering every direction of motion by a combined actuation from the control unit (CU).

18. Mechatronic manipulator (1) according to any one of claims 13 to 16, wherein the actuators (2) of a section (S) are decoupled from the actuators of the other sections (S) even when the sections are in series, such that the motion imparted to a section is not imparted to upstream sections of the series.

19. Mechatronic manipulator (1) according to any one of claims 13 to 17, wherein each section (S) and/or hollow flexible unit (11) comprise a proximal and a distal end defined as those of said of the structure (10), said actuators (2) imparting the motion to the distal end of each section (S) and/or hollow flexible unit (11).

20. Mechatronic manipulator (1) according to claim 18, wherein said actuators (2) of a section (S) comprise a cable (21) extending from the distal end of said section (S) to the proximal end of said structure (10) wherein a motor (20) enables to pull on the cable (21) so as to actuate said section (S).

21. Mechatronic manipulator (1) according to claim 19, wherein the cable (21) of the actuators (2) of a section (S) is arranged within a guiding tube (22) which extends from the proximal end of this section (S) to the proximal end of the structure (10), such that an upstream section (S) is not imparted by the motion of this section (S).

22. Mechatronic manipulator (1) according to claim 20, wherein said guiding tube (22) of a section (S) is configured to slide relative to an upstream section (S) along sliding guides (23) enabling that the motion of the upstream section does not impart the downstream section (S).

23. Mechatronic manipulator (1) according to any one of claims 12 to 21, wherein at least the distal end of the manipulator (1) comprises a distal section having at least one gripping actuator (24) imparting a contraction of the diameter of the most distal hollow flexible unit (11) for enabling the grasping of objects in the environment of the manipulator (1).
